# EUROPEAN PATENT SPECIFICATION

(11) **EP 0 423 407 B1**
(45) Date of publication and mention of the grant of the patent: **08.12.1993**
(21) Application number: 89310713.6
(22) Date of filing: 18.10.1989
(51) Int. Cl.: B60J 10/02

(54) **Window molding members for automobiles, and method of manufacturing the same**
Fensterprofilstücke für Kraftfahrzeuge und Herstellungsverfahren dafür
Eléments de moulure de fenêtre pour véhicules automobiles et procédé de fabrication des mêmes

(43) Date of publication of application: 24.04.1991
(73) Proprietor: HASHIMOTO FORMING INDUSTRY CO LTD, Yokohama City Kanagawa Pref. (JP)
(72) Inventor: Tamura, Tatsuya Hashimoto Forming Industry Co. Ltd, Yokohama City Kanagawa Pref. (JP); Hotta, Tetsuo Hashimoto Forming Industry Co., Ltd., Yokohama City Kanagawa Pref. (JP)
(74) Representative: Senior, Alan Murray

(56) References cited:
- EP-A- 0 310 262
- EP-A- 0 319 262
- US-A- 4 757 659
- US-A- 4 757 660

## Description

The present invention relates to window molding members for automobiles, having a cross-section which varies in the longitudinal direction thereof, as well as a method of manufacturing such molding members.

Typically, window molding members are used in combination with automobiles including a body panel with an outer surface, a flange recessed from the outer surface, and a shoulder portion connecting the flange with the outer surface. The flange of the body panel serves to mount a window plate thereon, with the peripheral edge of the plate opposed to the shoulder portion of the body panel leaving a gap therebetween.

A number of kinds of window molding members, adapted to satisfy various functional and/or ornamental requirements, are known and widely used for automobiles. Among others, U.S., Patent US-A-4,757,659 and US-A-4,757,660 each discloses a window molding member having a cross-section which varies in the longitudinal direction of the molding member. This molding member includes an upper segment to extend along the upper edge of the window plate, a pair of side segments to extend along the side edges of the window plate, and a pair of corner segments integrally and continuously connecting the upper and side segments with each other in the longitudinal direction of the molding member.

In the known molding members mentioned above, each segment includes a main body adapted to cover the gap between the peripheral edge of the window plate and the shoulder portion of the body panel. The main body is provided with first and second lip sections on both sides, of which the first lip section is adapted to be brought into contact with the outer surface of the body panel. Each segment further includes a leg section which is integral with, and projects from the main body to extend into the gap. The leg section is provided, on its one side, with first and second support webs to project toward the window plate. The first web on the leg section cooperates with the second lip section of the main body to form channels along the side segments for guiding the flow of rain water on the window plate, and to form a first groove for accommodating the upper edge of the window plate. The second web, in turn, cooperates with the first web along the side segments to form second grooves for accommodating the side edges of the window plate, and is removed away along the upper segment, together with a portion of the leg section.

With such an arrangement of the known molding members, the second lip section of the main body for the upper segment is adapted to be brought into contact with the window plate along the upper edge thereof, and thus serves to realize a flush outer surface of the automobile body along the upper edge of the window plate. On the other hand, the second lip section of the main body for the side segments achieves the function to prevent rain water on the window plate from flowing onto side windows across the side segment and neighbouring body panel portion (or pillar) by guiding rainwater so as to flow along the channels without disturbing the driver's sight through the side windows.

In order to manufacture such molding members, a synthetic resin material is extruded from an extrusion die head into a continuous body of a cross-section which is constant throughout the entire length. Subsequently, the continuous body is cut into individual blank bodies with a predetermined length of a molding member. Each blank body is then subjected to removal of the first web along the regions corresponding to the corner segments, and also to removal of the second web and a part of the leg section along the region corresponding to the upper segment. A time-consuming delicate operation is required to effect the above-mentioned local cutting of the webs accurately, so that it is difficult to improve the manufacturing productivity and to significantly reduce the cost.

Moreover, since the first and second grooves have to be aligned with each other to accommodate the edge of the window plate, the corner segment tends to be excessively deformed when inserting the edge of the window plate into the grooves, and cannot be readily inserted into the gap between the shoulder portion of the body panel and the window plate. The deformed regions of the molding member are often apparently visible from outside, thereby significantly deteriorating the appearance.

Accordingly, it is a primary object of the present invention to provide a novel window molding member with a longitudinally variable cross-section, which can be readily manufactured with higher accuracy and productivity, and which can be easily combined with a window plate and mounted in place without deteriorating the appearance.

It is another object of the present invention to provide a method which is capable of readily manufacturing, with higher accuracy and productivity, window molding members with a longitudinally variable cross-section, which can be easily combined with a window plate and mounted in place without deteriorating the appearance.

According to one aspect of the present invention as defined in claim 1, there is provided a window molding member for automobiles including a body panel having an outer surface, a flange which is recessed from said outer surface, and a shoulder portion connecting said flange with said outer surface, as well as a window plate mounted on said flange of the body panel, said window plate having a peripheral edge to be opposed to said shoulder portion of the body panel so as to form a gap therebetween, said molding member comprising:
an upper segment to extend along an upper edge of the window plate, at least one side segment to extend along at least one side edge of the window plate, and at least one corner segment integrally and continuously connecting said upper and side segments with each other in the longitudinal direction of said molding member, each segment comprising:
a main body adapted to cover said gap, and provided with first and second lip sections on both sides thereof, said first lip section being adapted to contact with said outer surface of said body panel;
a leg section which is integral with, and projects from said main body to extend into said gap with a predetermined projection length as measured between said main body and the free end of the leg; and
means for defining a groove on one side of said leg section, said groove being adapted to accommodate said peripheral edge of the window plate and extending along substantially the entire length of the moulding member, said groove being arranged at a first predetermined distance from the free end of said leg section (Window molding member of the type disclosed e.g. in EP-A-0 310 262), characterised in that
said leg section has a first projection length along said upper segment, and a second projection length along said side segment which is greater than said first projection length, such that said groove is spaced first and second, mutually different, predetermined distances from said second lip along said upper and side segments respectively and said second lip section of the main body is, in use, brought into contact with the outer surface of said window plate along said upper segment, while said second lip section of the main body is, in use, spaced from said window plate along said side segment to define a channel between said second lip section of the main body and said window plate.

According to another aspect of the present invention, there is provided a method of manufacturing a window molding member according to any one of claims 1 to 6, comprising the steps of:
using a single extrusion die head with a first orifice of a cross-section substantially corresponding to that of said main body of the molding member, and a second orifice of a cross-section substantially corresponding to that of said leg section of the molding member;
forming first and second continuous bodies by simultaneously extruding at least one kind of synthetic resin material from said first and second orifices in said die head;
partially removing material from at least one of said first and second continuous bodies successively, along a longitudinal region for corresponding to said upper segment of body corresponding to the main body of said moulding member and said second body corresponding to a leg section of said moulding member,
removing material from at least one of said first and second bodies in a region to correspond to an upper segment of said moulding member, so that the length of said leg section between the main body and the groove is greater in the side segment than in the upper segment;
adhering said first and second bodies together while they are still hot to form a continuous composite body; and
cutting off a predetermined length of said composite body to form a moulding member. Further developments in line with claims 1 and 7 are referred to in the dependent claims 2 to 6 and 8 to 15.

The invention will now be described in detail with reference to the accompanying drawings, wherein:
Fig. 1 is a perspective view of an automobile including a window molding member in accordance with the present invention;
Fig. 2 is a partly broken perspective view of the molding member mounted in place, showing the corner segment for continuously connecting the upper and side segments with each other;
Fig. 3 is a cross-sectional view taken along the line A-A in Fig. 1, showing the upper segment of the molding member;
Fig. 4 is a cross-sectional view taken along the line B-B in Fig. 1, showing the side segment of the molding member;
Fig. 5 is a schematic diagram of a production line which may be used to carry out the method according to the present invention for continuously manufacturing the molding member;
Fig. 6 is a front view of the extrusion die head, with the movable cutter element of the shaping device assuming one operative position corresponding to the formation of the side segment.
Fig. 7 is a front view of the extrusion die head, with the movable cutter element of the shaping device assuming another operative position corresponding to the formation of the upper segment;
Fig. 8 is a sectional view taken along the line C-C in Fig. 6;
Fig. 9 is a sectional view taken along the line D-D in Fig. 7;
Fig. 10 is a sectional view taken along the line E-E in Fig. 8;
Fig. 11 is a sectional view taken along the line F-F in Fig. 9;
Fig. 12 is a fragmentary front view of a molding member;
Fig. 13 is a diagram showing the relationship between the feeding length of the core element and the displacement of the movable cutter element of the shaping device;
Figs. 14a, 15a and 16 are front views, similar to Figs. 6 and 7, showing other embodiments of the shaping device, respectively;
Figs. 14b and 15b are cross-sectional views showing other embodiments of the side segment manufacturing by using the shaping device of Figs. 14a and 15a, respectively; and
Figs. 14c and 15c are cross-sectional views showing other embodiments of the upper segment manufactured by using the shaping device of Figs. 14a and 15a, respectively.

The present invention will be more fully explained hereinafter, with reference to some preferred embodiments shown in the attached drawings.

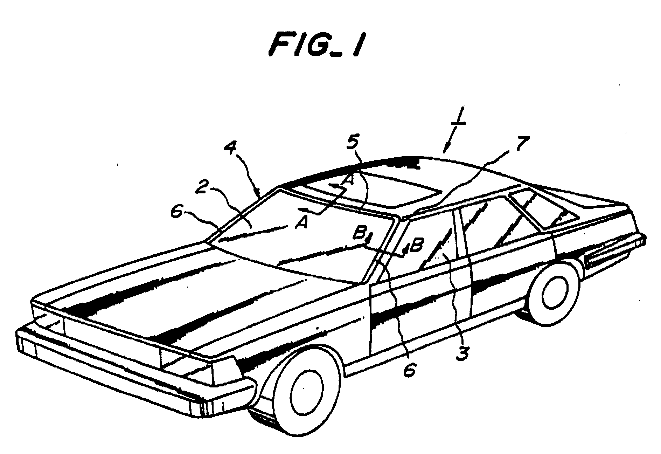

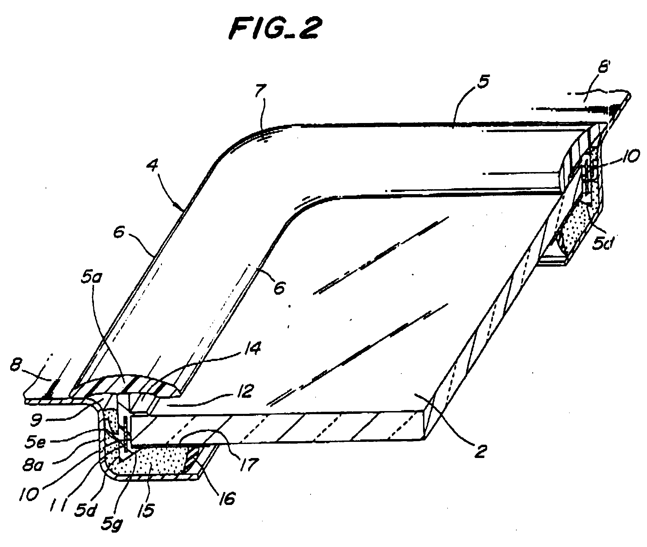

There is shown in Fig. 1 an automobile with a body 1, a front window or windshield plate 2, side windows 3, as well as a windshield molding member 4 according to the present invention, which is to be arranged along the periphery of the windshield plate 2. The windshield plate 2 may be an inorganic glass plate or appropriate synthetic resin plate with transparency, such as polycarbonate or acrylic resin plate. The molding member 4, as shown in Fig. 2, includes an upper segment 5 to extend along an upper edge of the windshield plate 2, a pair of side segments 6 to extend along the side edges of the windshield plate 2, and a pair of corner segments 7 continuously connecting the upper and side segments 5, 6 into an integral component.

The molding member 4 may be composed of a soft polyvinyl-chloride (PVC) resin, ionomer resin, ethylene-vinyl acetate (EVA) copolymer resin, transparent cellulose acetate butylate (CAB) resin, or of other suitable thermoplastic elastomer or synthetic resin with flexibility, extruded into respectively predetermined cross-sections of the upper, side and corner segments 5, 6, 7 which are basically same and slightly different from each other.

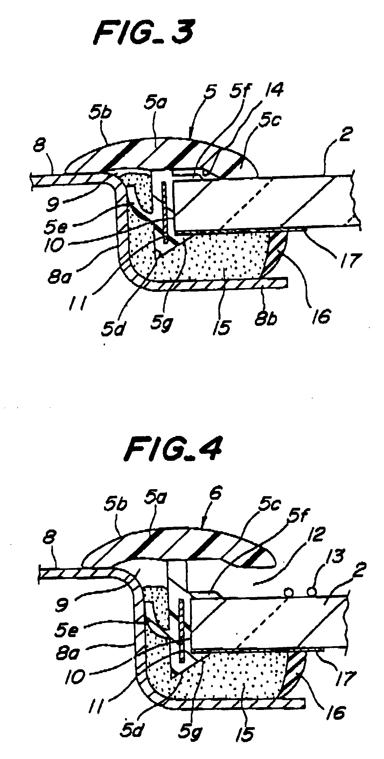

As shown more particularly in Figs. 2 and 3, the upper segment 5 includes a main body 5a which is provided with a first lip section 5b to be engaged with the outer surface of the vehicle body panel 8 throughout the entire length of the molding member 4, a second lip section 5c to be engaged with the outer surface of a windshield plate 2 along the upper segment 5 of the molding member 4, and a leg section 5d to be inserted into a gap 9 between the edge of the windshield plate 2 and a stepped shoulder portion 8a of the body panel 8. To prevent undesirable withdrawal of the leg section 5d out of the gap 9, the leg section 5d has at least one fin 5e on its one side, which is to be engaged with the shoulder portion 8a of the body panel 8. The leg section 5d further includes first and second webs 5f, 5g on its another side, which are spaced from each other substantially by a distance corresponding to the thickness of the windshield plate 2, and adapted to engage with outer and rear surfaces of the windshield plate, respectively. The first and second webs 5f, 5g define a groove 10 which serves to accommodate the edge of the windshield plate 2 therein. The groove is at a predetermined distance from the free end of the leg section, this distance preferably being constant throughout the length of the molding member. The segment 5 has at least one core element 11 arranged in the leg section 5d, which is preferably composed of a metal strip with a high resistivity to rust, such as aluminum or stainless steel strip. The core element 11 may also include other material with a low elongation, such as a strand of glass- or carbon-fibers, or cords of appropriate fiber materials, such as polyester fibers or the like.

The side segment 6, as shown in Fig. 4, has a basic cross-section which is substantially same as that of the above-mentioned upper segment 5, except that the leg section 5d is slightly longer than the leg section for the upper segment 5 such that the second lip section 5c of the main body 5a is spaced from the outer surface of the windshield plate 2 along the side segments 6. Thus, a channel 12 is defined between the lip section 5c and the windshield plate 2 to extend along each side edge of the windshield plate 2, whereby rain water 13 on the windshield plate 2 can be prevented from flowing onto the side windows 3 across the side segment 6 and the neighbouring pillar of the vehicle body 1, by guiding the rain water to flow along the channel 12 without disturbing the driver's sight through the side windows 3. On the other hand, the second lip section 5c of the main body 5a, which is brought into contact with the outer surface of the windshield plate 2 along the upper segment 5, as mentioned above, serves to realize a so-called flush outer surface along the upper edge of the windshield plate 2. The corner segments 7 for continuously connecting the upper and side segments 5, 6 into an integral component are of a cross-section which gradually changes from that of the upper segment 5 to that of the side segment 6.

In the above-mentioned molding member 4 according to the present invention, as shown in Figs. 2 to 4, the groove 10 between the webs 5f, 5g for accommodating the edge of the windshield plate 2 extends in a plane continuously along the upper, side and corner segments 5, 6 and 7. To mount the molding member 4 in place, the upper and side edges of the windshield plate 2 may be inserted into the groove 10 of the molding member 4 before the plate 2 is adhered to a flange portion 8b of the body panel 8 with an adhesive material 15 and a dam rubber 16 arranged therebetween, which are covered by an opaque printed layer 17 on the periphery of the rear surface of the plate 2. Alternatively, the windshield plate 2 may be firstly mounted on the flange portion 8b of the body panel 8, with the molding member 4 being subsequently inserted into the gap 9 before the adhesive material 15 hardens. The insertion of the molding member 4 into the gap 9 can be carried out easily, due to a longitudinal alignment of the groove 10 throughout the entire length of the molding member 4.

Advantageously, the second lip section 5c of the main body 5a is formed with a recess 14 in its rear surface opposite to the windshield plate 2, having a depth which is slightly greater than the thickness of the web 5f. By this, the web 5f along the upper segment 5 can be completely accommodated within the recess 14, making it possible to achieve a complete contact of the lip section 5b with the windshield plate 2, even when the groove 10 engaging the edge of the plate 2 is defined by the web 5f on the outer side of the plate 2.

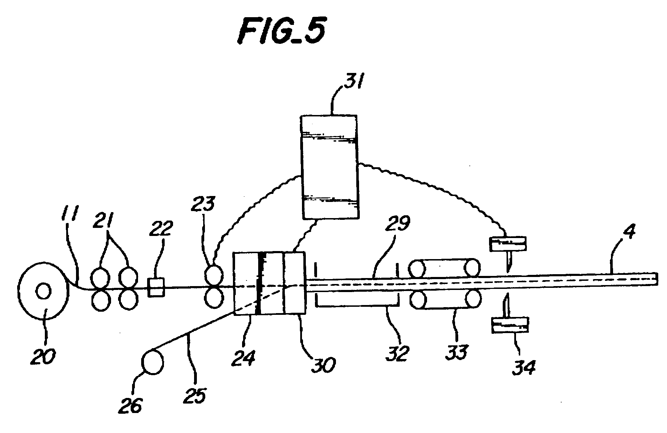

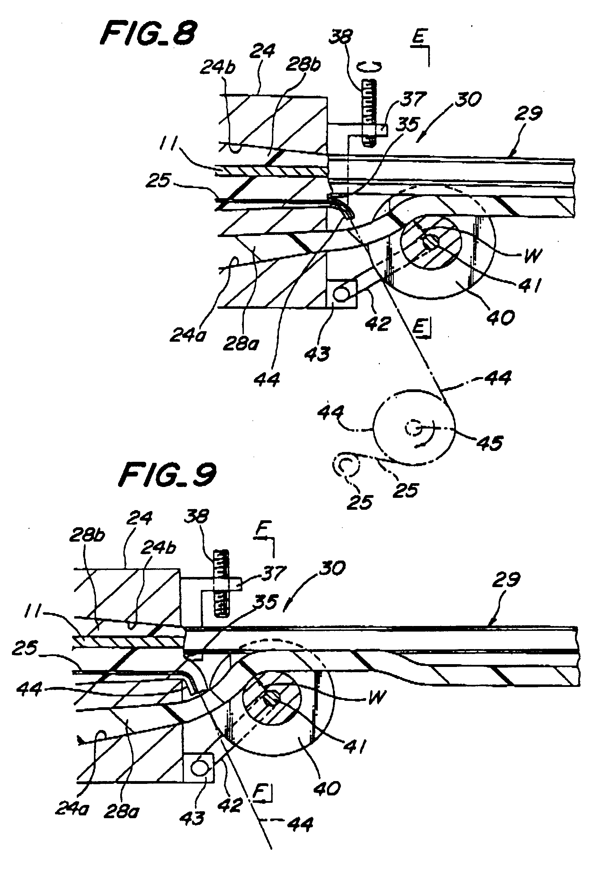

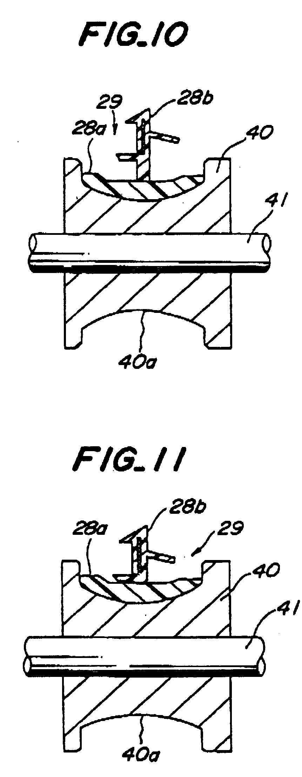

Fig. 5 shows the schematic diagram of a production line, which may be used to continuously manufacture the above-mentioned molding members 4 in accordance with the present invention. The production line includes an uncoiler 20 and associated pinch rollers 21 for feeding the core element 11. The core element 11 is preferably passed through a roll coating device 22 where it is applied with an appropriate adhesive material and subjected to baking. The feeding length of the core element 11 is detected by a detector 23, such as a rotary encoder. The core element 11 is fed to an extrusion die head 24 which is connected to an extruder, not shown. The extruder is adapted to heat appropriate one of the above-mentioned thermoplastic resins, e.g. PVC resin, to a temperature higher than its softening temperature, which is then fed to the die head 24 in a molten state. The die head 24 has a pair of orifices 24a, 24b which are arranged spaced from, but close to each other (Figs. 8 and 9). The orifice 24a has a cross-section which corresponds to that of the main body 5a, while the orifice 24b has a cross-section which corresponds to the leg section 5d with the fin 5e and the webs 5f, 5g.

If necessary, the die head 24 may be connected with two extruders which are adapted to feed to the die head 24 mutually compatible synthetic resin materials which are different in color, transparency and/or hardness. In this case, if the mutually compatible resins do not still exhibit a sufficient adhesion to each other, at least one of the continuous bodies extruded from the orifices 24a, 24b may be applied with an adhesive material by appropriate roll coater, immediately after the extrusion.

Advantageously, an additional core element 25 from another uncoiler 26 also is supplied to the die head 24 as shown in Fig. 5. The additional core element 25 may be composed of a thread or cord of natural or synthetic fiber material with a sufficient heat resistivity, which is coextruded with and embedded in the synthetic resin material forming the leg section 5d, specifically in that end region which is to be opposed to the main body 5a.

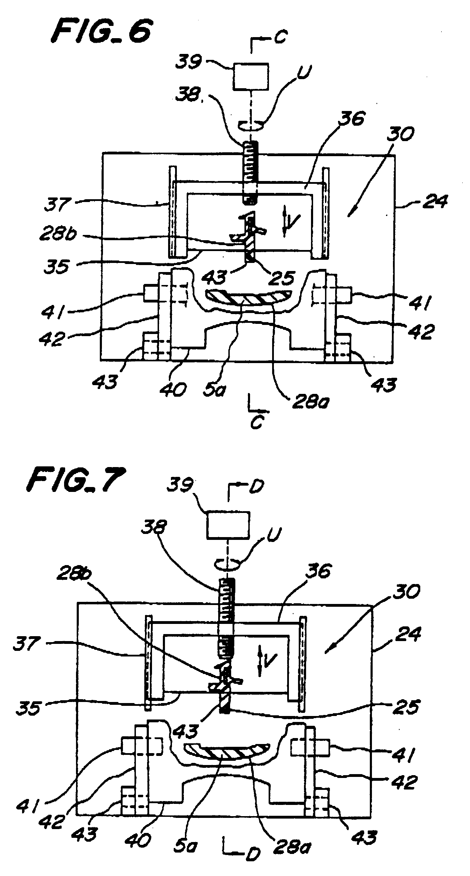

The molten synthetic resin material is extruded, together with the core elements 11, 25, from the orifices 24a, 24b of the die head 24 simultaneously, as continuous extruded bodies 28a, 28b. Immediately after the extrusion, the extruded body 28b corresponding to the leg section 5d of the molding member 4 is subjected to such a cutting that a predetermined amount of its synthetic resin material is removed, inclusive of the above-mentioned end region in which the additional core element 25 is embedded, thereby to adjust the length of the leg section 5d in accordance with the feeding length of the core element 11. The extruded bodies 28a, 28b are then caused to adhere with each other while they are still sufficiently hot to achieve an adhesion, so as to form a continuous composite body 29 with a cross-section which varies in the longitudinal direction in accordance with the feeding length of the core element 11. To this end, a shaping device 30 to be described hereinafter with reference to Figs. 6 to 9 is arranged adjacent to, and on the discharge side of the die head 24, and is controlled by a controller 31 which is connected to the detector 23. The continuous composite body 29, in which the extruded bodies 28a, 28b are adhered with each other, is subsequently guided through a cooling tank 32 by a hauling device 33, and cut into a predetermined length of a molding member 4 by a cutting device 34 which also is connected with and controlled by the controller 31 in accordance with the feeding length of the core element 11.

Referring to Figs. 6 to 9, the shaping device 30 includes a movable cutter element 35 in the form of a wire under a predetermined tension, mounted on a frame 36 which is vertically movably supported by a guide member 37 arranged adjacent to the die head 24. To this end, the frame 36 is threadedly engaged with a screw rod 38 which is connected to an output shaft of a reversible servomotor 39 which, in turn, is connected to the controller 31. Thus, the vertical position of the cutter element 35, and hence the length of the leg section 5d of the molding member 4, can be controlled in accordance with the feeding length of the core element 11. The shaping device 30 further includes, as shown in Figs. 8 to 11, a rotatable guide roller 40 for guiding the extruded body 28a corresponding to the main body 5a of the molding member 4. The guide roller 40 is arranged on the lower rear side of the cutter element 35, and is formed in its outer periphery with a guide groove 40a (Figs. 10 and 11) with a cross-sectional shape corresponding to that of the main body 5a. The guide roller 40 is rotatably supported by a shaft 41 which is mounted on a pair of swing arms 42. These swing arms 42 are supported by brackets 43 on the die head 24, and are resiliently biased by a spring, not shown, in a direction indicated by an arrow W, in which the extruded body 28a for the main body 5a is urged against the extruded body 28b for the leg section 5d. Because the extruded body 28a is guided by the groove 40a in the roller 40 in a still hot and soft state of the resin, the groove 40a is preferably composed of stainless steel, ceramics, appropriate synthetic resin or the like material having a smooth outer surface and exhibiting a poor adhesion to the extruded body 28a.

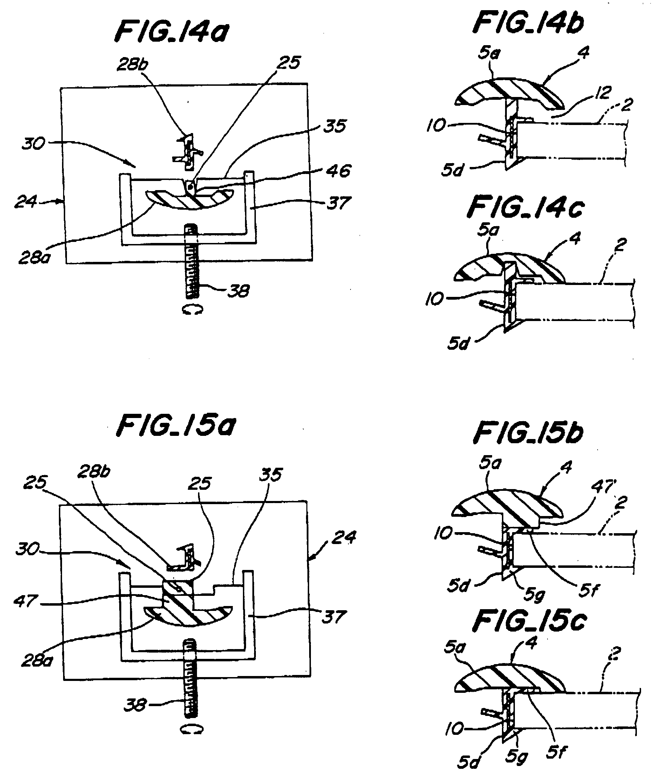

For a molding member 4 with the side segments 6 of a length ℓ₁, the corner segments 7 of a length ℓ₂ and the upper segment of a length ℓ₃, the relationship between the feeding length of the core element 11 and the vertical displacement of the movable cutter element 35 of the shaping device 30 is as shown in Fig 13.

More particularly, starting by way of example from an operational mode shown in Figs. 6 and 8 of the production line, the synthetic resin material is simultaneously extruded into continuous bodies 28a, 28b, with the cutter element 35 of the shaping device 30 assuming a lowermost position such that a predetermined minimum amount of the material 44 of the continuous body 28b for the leg section 5d is removed together with the core element 25. Subsequently, the continuous body 28a for the main body 5a is guided by the guide roller 40 and resiliently urged against the continuous body 28b into adhesion with each other, to form a continuous composite body 29 with the cross-section of the side segment 6.

As the detector 23 detects the feeding length ℓ₁ of the core element 11, or completion of the formation of a side segment 6, the servomotor 39 is actuated to drive the screw rod 38 and gradually displace the cutter element 35 such that the continuous extruded body 28b for the leg section 5d of the molding member 4 is subjected to the removal of gradually increasing amount of material to form a composite body 29 with the cross-section of a corner segment 7.

Upon a subsequent detection of the feeding length ℓ₂ of the core element 11, or of the completion of the formation of a corner segment 7, the servomotor 39 is stopped by the controller 31. On this occasion, as shown in Figs. 7 and 9, the cutter element 35 has already been fully displaced to assume an uppermost position for removing a predetermined maximum amount of the material 44 from the continuous body 28b for the leg section 5d to form the composite body 29 with the cross-section of an upper segment 5.

As the detector 21 detects the feeding length ℓ₃ of the core element 11, or completion of the formation of an upper segment 5, the servomotor 39 is actuated to drive the screw rod 38 in a reverse direction and displace the cutter element 35 back to its initial position shown in Figs. 6 and 8, forming a composite body 29 for another corner and side segments 7, 6 in an opposite sequence.

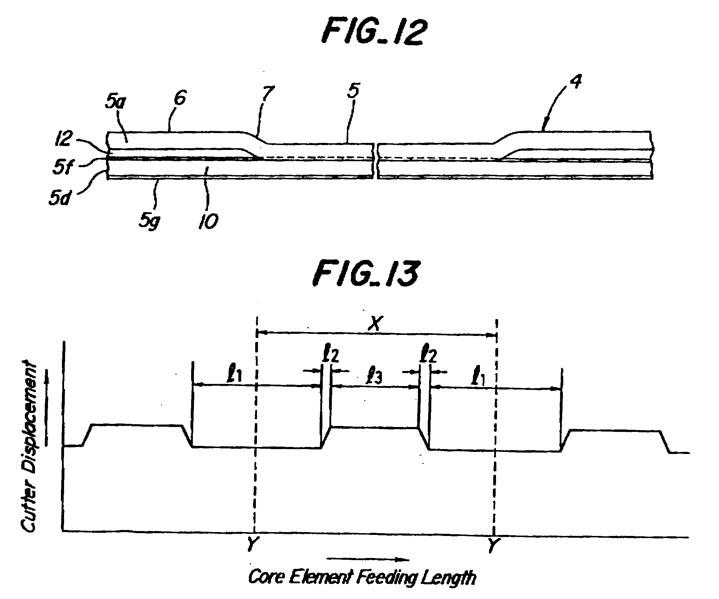

These steps are repeated to continuously produce a desired number of the molding members 4. It is of course that the individual molding members 4 as shown in Fig. 12 are obtained by cutting the continuous composite body 29 into the predetermined length by means of the cutting device 34. The length of each molding member 4 (=2ℓ₁ + 2ℓ₂ + ℓ₃) is represented in Fig. 13 by X, and the locations of the continuous composite body 29 to be cut into the predetermined length by the cutting device 34 are shown at Y.

During the above-mentioned steps, the extruded body 28b for the leg section 5d is thus subjected to a continuous removal of a predetermined amount of its material, inclusive of the end region in which the additional core element 25 is embedded. The removed material 44 together with the additional core element 25 is preferably hauled under a tension and at the same speed as the composite body 29, and wound about a hauling roller 45 which is driven with a constant torque, as shown by an imaginary line in Fig. 8.

The removed material 44 is sufficiently reinforced by the additional core element 25, and can thus be stably hauled even under a tension without accompanying undesirable elongation or breakage. When the additional core element 25 is composed of a thread or cord with a circular cross-section, the removed material 44 can be advantageously hauled in a desired direction. However, the core element 25 may also be composed of a tape of polyester or the like resin material, or of a strip of aluminum or the like metal sheet. The additional core element 25 is preferably embedded in the synthetic resin material for the leg section 5d such that it is partly exposed outside. Then, the core element 25 and the synthetic resin material 44 can be readily separated from each other, and recovered and used once again, if necessary.

Other embodiments of the method according to the present invention will be explained below with reference to Figs. 14a to 14c, Figs. 15a to 15c and Fig. 16.

In the embodiment shown in Figs. 14a to 14c, the continuous bodies 28a, 28b for the main body 5a and the leg section 5d, respectively, are extruded separately form the orifices 24a, 24b of the die head 24 as in the previous embodiment. The continuous body 28a for the main body 5a is extruded integrally with a ridge 46 which is substantially same in thickness as the leg section 5d, and in which the additional core element 25 is embedded. This continuous body 28a is subjected to the removal of the predetermined amount of its material, inclusive of the ridge 46, and is thereafter caused to adhere with the continuous body 28b for the leg section 5d.

In the embodiment shown in Figs. 15a to 15c, the continuous bodies 28a, 28b for the main body 5a and the leg section 5d, respectively, are extruded separately form the orifices 24a, 24b of the die head 24 as in the previous embodiment. The continuous body 28a for the main body 5a is extruded integrally with a ridge 47 which is somewhat greater in thickness than the leg section 5d, and in which the additional core element 25 is embedded. This continuous body 28a is subjected to the removal of the predetermined amount of its material, inclusive of the ridge 47, and is thereafter caused to adhere with the continuous body 28b for the leg section 5d.

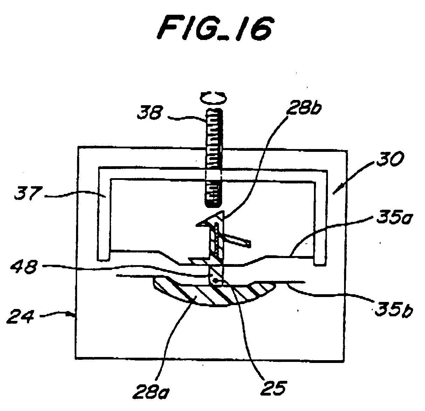

In the embodiment shown in Fig. 16, the continuous bodies 28a, 28b for the main body 5a and the leg section 5d, respectively, are extruded from the die head 24 as being adhered to each other. These extruded bodies 28a, 28b are separated from each other by a stationary cutter element 35a. Subsequently, one of the extruded bodies, e.g. the extruded body 28b for the leg section 5d as in the illustrated example, is subjected to removal of a predetermined amount of material 48 by a movable cutter element 35b. The two extruded bodies 28a, 28b are then caused to adhere with each other once again. The amount of the material 48 to be removed can be varied by gradually displacing the movable cutter element 35b toward and away from the stationary cutter element 35a.

In the above-mentioned embodiments of the present invention, the operation of the production line is controlled in accordance with the feeding length of the core element 11. However, this is not a pre-requisite condition; the operation of the production line may be controlled in accordance with the feeding length of the additional core element 25 or with the hauling length of the continuous composite body 29.

It will be appreciated from the foregoing description that the present invention makes it possible to readily and reliably manufacture window molding members with upper and side segments of basically same and slightly different cross-section, in a continuous manner and with a higher productivity. The window molding member according to the present invention can be easily combined with the window plate, and mounted in place without deteriorating the appearance.

Furthermore, the present invention provides a method which includes the steps of extruding continuous bodies corresponding to the main body and the leg section of the molding member, removing a predetermined amount of material from at least one of the extruded continuous bodies, and thereafter causing the extruded bodies to adhere with each other. The method according to the present invention thus allows an efficient manufacture of molding members with excellent appearance, and achieves a remarkable reduction in the manufacturing cost.

## Claims

1. A window moulding member for use in vehicles (1) having a body panel (8) with a recessed flange (8b) and a window plate (2) to be mounted on said flange leaving a gap (9) between the peripheral edge of said window plate and a shoulder (8a) connecting said flange (8b) with said outer surface of said body panel, the moulding member comprising:
a main body (5a) to cover said gap and having a first lip (5b) section to contact the outer surface of said body panel,
a leg section (5d) integral with said main body and to extend into said gap; and
means (5f, g) defining a groove on one side of said leg section to engage said peripheral edge of said window plate and extending along substantially the entire length of the moulding member,
the moulding member having integral and continuous upper, corner and side segment (5, 6, 7) along its length corresponding to respective parts of the window plate, characterised in that: the length of the leg section, between the main body and groove, is greater in the side segment than in the upper segment so that a second lip section (5c) of the main body is, in use, spaced from the window plate to form a channel (12) in the side segment but not in the upper segment.

2. The window moulding member as claimed in claim 1, wherein said means defining said groove comprises first and second webs (5f, g) formed on said one side of the leg section (5d), and spaced from each other substantially by a distance corresponding to the thickness of said window plate, said first and second webs being adapted to engage with outer and rear surfaces of said window plate, respectively.

3. The window moulding member as claimed in claim 2, wherein said second lip section has a recess (14) in its rear surface opposite to said window plate, said recess having a depth which is at least the same as the thickness of said first web.

4. The window moulding member as claimed in claim 1, 2 or 3, wherein said leg section (5d) is formed, on its side which is to be remote from said window plate, with at least one fin (5e) which is adapted to be engaged with said shoulder portion (8a) of said body panel.

5. The window moulding member as claimed in claim 4, wherein said at least one fin (5e) is arranged in that region of said leg section in which said means defining said groove is arranged.

6. The window moulding member as claimed in any of claims 1 to 5, wherein at least one core element (11) is embedded in said leg section (5d).

7. A method of manufacturing a window moulding member according to any one of the preceding claims, comprising the steps of:
extruding first and second continuous bodies (28a & b) of synthetic resin from first (24a) and second (24b) orifices respectively, said first body (28a) corresponding to the main body (5a) of said moulding member and said second body (28b) corresponding to a leg section (5d) of said moulding member,
removing material from at least one of said first (28a) and second (28b) bodies in a region to correspond to an upper segment (5) of said moulding member, so that the length of said leg section (5d) between the main body and the groove is greater in the side segment than in the upper segment;
adhering said first and second bodies together while they are still hot to form a continuous composite body (29); and
cutting off a predetermined length of said composite body (29) to form a moulding member.

8. The method as claimed in claim 7, wherein said first and second continuous bodies (28a, b) are extruded from said first and second orifices spaced apart.

9. The method as claimed in claim 7, wherein said first and second continuous bodies (28a, b) are extruded from said first and second orifices in adhesion with each other.

10. The method as claimed in claim 7, 8 or 9, further comprising the step of detecting the extruded length of either one of said first and second continuous bodies, wherein said step of partial removal of the material is carried out in response to the detected extruded length.

11. The method as claimed in claim 7, 8, 9 or 10, wherein said first continuous body (28a) is coextruded together with a core element (25) having a heat resistivity which is sufficient to withstand the melting temperature of the synthetic resin material forming said first continuous body, and wherein said step of partial removal of the material is effected with respect to that region of said first continuous body which includes said core element.

12. The method as claimed in claim 11, wherein said core element is arranged in that region of said first continuous body which is opposite to said second continuous body.

13. The method as claimed in claim 7, 8, 9 or 10, wherein said second continuous body is coextruded together with a core element having a heat resistivity which is sufficient to withstand the melting temperature of the synthetic resin material forming said second continuous body, and wherein said step of partial removal of the material is effected with respect to that region of said second continuous body which includes said core element.

14. The method as claimed in claim 13, wherein said core element is arranged in that region of said second continuous body which is opposite to said first continuous body.

15. The method as claimed in claim 11 or 13, further comprising the steps of:
continuously removing material partially from at least one of said first and second continuous bodies, also along a longitudinal region for said side segment of the moulding member; and
continuously recovering the removed material together with said core element.

## Patentansprüche

1. Fensterformteil zur Verwendung in Fahrzeugen (1), die eine Karosseriebeplankung (8) mit einem zurückgesetzten Flansch (8b) sowie eine an dem besagten Flansch zu montierende Fensterscheibe (2), wobei eine Lücke (9) zwischen der Umfangskante dieser Fensterscheibe und einer den besagten Flansch (8b) mit der erwähnten Außenfläche der genannten Karosseriebeplankung verbindenden Schulter (8a) verbleibt, besitzen, das Formteil umfaßt:
- ein Hauptteil (5a), das die besagte Lücke abdeckt und ein erstes Randstück (5b) zur Anlage an der Außenfläche der genannten Karosseriebeplankung hat,
- ein Stegteil (5d), das mit dem erwähnten Hauptteil einstückig ist sowie sich in die besagte Lücke hinein erstreckt;
und
- Mittel (5f, g), die an einer Seite des genannten Stegteils eine Kehle abgrenzen, welche mit der erwähnten Umfangskante der besagten Fensterscheibe in Anlage kommen und die sich im wesentlichen entlang der gesamten Länge des Formteils erstrecken,
- wobei das Formteil einstückige sowie durchlaufende obere, Seiten- und Ecken-Teilstücke (5, 6, 7) entlang seiner Länge hat, welche den jeweils zugeordneten Teilen der Fensterscheibe entsprechen, dadurch gekennzeichnet, daß: die Länge des Stegteils zwischen dem Hauptteil und der Kehle im Seiten-Teilstück größer als im oberen Teilstück ist, so daß ein zweites Randstück (5c) des Hauptteils im Gebrauch von der Fensterscheibe beabstandet ist, um eine Rinne (12) im Seiten-Teilstück, nicht jedoch im oberen Teilstück zu bilden.

2. Fensterformteil nach Anspruch 1, in welchem die erwähnten Mittel, welche die genannte Kehle abgrenzen, einen ersten sowie zweiten Schenkel (5f, g) umfassen, die an der besagten einen Seite des Stegteils (5d) ausgebildet und voneinander im wesentlichen mit einem Zwischenraum beabstandet sind, der der Dicke der erwähnten Fensterscheibe entspricht, wobei die besagten ersten und zweiten Schenkel dazu eingerichtet sind, jeweils mit Außen- bzw. Rückflächen der erwähnten Fensterscheibe in Anlage zu kommen.

3. Fensterformteil nach Anspruch 2, in welchem das genannte zweite Randstück in seiner der erwähnten Fensterscheibe gegenüberliegenden Rückfläche eine Ausnehmung (14) besitzt, welche Ausnehmung eine Tiefe hat, die wenigstens gleich der Dicke des besagten ersten Schenkels ist.

4. Fensterformteil nach Anspruch 1, 2 oder 3, in welchem das besagte Stegteil (5d) an seiner von der erwähnten Fensterscheibe entfernt anzuordnenden Seite mit wenigstens einer Rippe (5e) ausgestaltet ist, welche imstande ist, mit dem genannten Schulterteil (8a) der erwähnten Karosseriebeplankung in Anlage zu kommen.

5. Fensterformteil nach Anspruch 4, in welchem die genannte wenigstens eine Rippe (5e) in demjenigen Bereich des besagten Stegteils angeordnet ist, in dem die erwähnten, die genannte Kehle abgrenzenden Mittel angeordnet sind.

6. Fensterformteil nach einem der Ansprüche 1 bis 5, in welchem wenigstens ein Kernelement (11) in das besagte Stegteil (5d) eingebettet ist.

7. Verfahren zur Herstellung eines Fensterformteils nach einem der vorhergehenden Ansprüche, das die Schritte umfaßt:
- des Extrudierens von ersten und zweiten ununterbrochenen Körpern (28a & b) aus Kunstharz von jeweils ersten (24a) bzw. zweiten (24b) Düsenöffnungen, wobei der genannte erste Körper (28a) dem Hauptteil (5a) des erwähnten Formteils entspricht und der genannte zweite Körper (28b) einem Stegteil (5d) des erwähnten Formteils entspricht,
- des Entfernens von Material von wenigstens einem der genannten ersten (28a) und zweiten (28b) Körper in einem Bereich, welcher einem oberen Teilstück (5) des erwähnten Formteils entspricht, so daß die Länge des besagten Stegteils (5d) zwischen dem Hauptteil und der Kehle im Seiten-Teilstück größer als im oberen Teilstück ist;
- des Verklebens des genannten ersten sowie zweiten Körpers miteinander, während sie noch heiß sind, um einen ununterbrochenen Verbundkörper (29) zu bilden; und
- des Abtrennens einer vorbestimmten Länge des genannten Verbundkörpers (29), um ein Formteil zu bilden.

8. Verfahren nach Anspruch 7, bei welchem die genannten ersten und zweiten Körper (28a, b) aus den erwähnten ersten und zweiten Düsenöffnungen voneinander beabstandet extrudiert werden.

9. Verfahren nach Anspruch 7, bei welchem die genannten ersten und zweiten ununterbrochenen Körper (28a, b) aus den erwähnten ersten und zweiten Düsenöffnungen in Haftverbindung miteinander extrudiert werden.

10. Verfahren nach Anspruch 7, 8 oder 9, das ferner den Schritt des Erfassens der extrudierten Länge von einem der ersten und zweiten ununterbrochenen Körper umfaßt, wobei der genannte Schritt des teilweisen Entfernens des Materials in Abhängigkeit von der erfaßten extrudierten Länge ausgeführt wird.

11. Verfahren nach Anspruch 7, 8, 9 oder 10, bei welchem der genannte erste ununterbrochene Körper (28a) zusammen mit einem Kernelement (25), das eine Hitzebeständigkeit hat, die ausreichend ist, um der Schmelztemperatur des den genannten ersten ununterbrochenen Körper bildenden Kunstharzmaterials zu widerstehen, extrudiert wird und bei welchem der erwähnte Schritt des teilweisen Entfernens des Materials mit Bezug auf denjenigen Bereich des genannten ersten ununterbrochenen Körpers, der das besagte Kernelement enthält, ausgeführt wird.

12. Verfahren nach Anspruch 11, bei welchem das besagte Kernelement in demjenigen Bereich des genannten ersten ununterbrochenen Körpers angeordnet ist, welcher zu dem genannten ununterbrochenen Körper gegenüberliegend ist.

13. Verfahren nach Anspruch 7, 8, 9 oder 10, bei welchem der genannte zweite ununterbrochene Körper zusammen mit einem Kernelement, das eine Hitzebeständigkeit hat, die ausreichend ist, um der Schmelztemperatur des den genannten zweiten ununterbrochenen Körper bildenden Kunstharzmaterials zu widerstehen, extrudiert wird und bei welchem der erwähnte Schritt des teilweisen Entfernens des Materials mit Bezug auf denjenigen Bereich des genannten zweiten ununterbrochenen Körpers, der das besagte Kernelement enthält, ausgeführt wird.

14. Verfahren nach Anspruch 13, bei welchem das besagte Kernelement in demjenigen Bereich des genannten zweiten ununterbrochenen Körpers angeordnet ist, welcher zu dem genannten ersten ununterbrochenen Körper gegenüberliegend ist.

15. Verfahren nach Anspruch 11 oder 13, das ferner die Schritte umfaßt:
- des kontinuierlichen Entfernens von Material teilweise von wenigstens einem der genannten ersten und zweiten ununterbrochenen Körper auch entlang eines Längsbereichs für das erwähnte Seiten-Teilstück des Formteils; und
- des kontinuierlichen Wiedergewinnens des entfernten Materials zusammen mit dem erwähnten Kernelement.

## Revendications

1. Joint de vitrage pour utilisation dans des véhicules (1), ayant un panneau (8) de carrosserie avec un rebord (8b) en retrait et une plaque (2) de vitrage pour être montée sur ledit rebord en laissant un espace (9) entre le bord périphérique de ladite plaque de vitrage et un épaulement (8a) reliant ledit rebord (8b) à ladite surface extérieure dudit panneau de carrosserie, le joint comprenant :
- un corps principal (5a) pour couvrir ledit espace et ayant une première section (5b) de lèvre pour être en contact avec la surface extérieure dudit panneau de carrosserie,
- une section (5d) de jambe d'un seul tenant avec ledit corps principal et s'étendant dans ledit espace, et
- un moyen (5f, g) définissant une rainure sur un côté de ladite section de jambe, pour un engagement avec ledit bord périphérique de ladite plaque de vitrage, et s'étendant sensiblement sur toute la longueur du joint,
- le joint ayant un segment supérieur (5, 6, 7) d'un seul tenant et continu, de coin et de côté, le long de sa longueur correspondant aux parties respectives de la plaque de vitrage, caractérisé en ce que la longueur de la section de jambe, entre le corps principal et la rainure, est plus grande dans le segment latéral que dans le segment supérieur, de telle sorte qu'une seconde section (5c) de lèvre du corps principal soit, en pratique, espacée de la plaque de vitrage pour former un canal (12) dans le segment latéral, mais pas dans le segment supérieur.

2. Joint de vitrage selon la revendication 1, dans lequel ledit moyen définissant ladite rainure comprend une première et une seconde âmes (5f, g) formées sur l'un desdits cotés de la section (5d) de jambe, et espacées l'une de l'autre sensiblement d'une distance correspondant à l'épaisseur de ladite plaque de vitrage, lesdites première et seconde âmes étant adaptées pour un engagement respectivement avec les surfaces extérieure et arrière de ladite plaque de vitrage.

3. Joint de vitrage selon la revendication 2, dans lequel ladite section de seconde lèvre a un renfoncement (14) dans sa surface arrière opposée à ladite plaque de vitrage, ledit renfoncement ayant une profondeur qui est au moins égale à l'épaisseur de ladite première âme.

4. Joint de vitrage selon les revendications 1, 2 ou 3, dans lequel' ladite section (5d) de jambe est formée, sur son côté éloigné de ladite plaque de vitrage, avec au moins une patte (5e) qui est adaptée pour un engagement avec ladite partie (8a) d'épaulement dudit panneau de carrosserie.

5. Joint de vitrage selon la revendication 4, dans lequel au moins une patte (5e) est disposée dans la région de ladite section de jambe dans laquelle est disposé le moyen définissant ladite rainure.

6. Joint de vitrage selon l'une quelconque des revendications 1 à 5, dans lequel au moins un élément (11) de coeur est noyé dans ladite section (5d) de jambe.

7. Procédé pour fabriquer un joint de vitrage selon l'une quelconque des revendications précédentes, comprenant les étapes consistant à:
- extruder de premier et second corps continus (28a et b) en résine synthétique à partir respectivement de premier (24a) et second (24b) orifices, ledit premier corps (28a) correspondant au corps principal (5a) dudit joint, et ledit second corps (28b) correspondant à une section (5d) de jambe dudit joint;
- enlever le matériau depuis au moins l'un desdits premier (28a) et second (28b) corps dans une région pour correspondre à un segment supérieur (5) dudit joint, de telle sorte que la longueur de ladite section (5d) de jambe entre le corps principal et la rainure soit plus grande dans le segment latéral que dans le segment supérieur;
- faire adhérer ensemble lesdits premier et second corps pendant qu'ils sont encore chauds, pour former un corps composite continu (29); et
- couper une longueur prédéterminée dudit corps composite (29) pour former un joint.

8. Procédé selon la revendication 7, dans lequel lesdits premier et second corps continus (28a, b) sont extrudés desdits premier et second orifices, séparés l'un de l'autre.

9. Procédé seln la revendication 7, dans lequel lesdits premier et second corps continus (28a, b) sont extrudés desdits premier et second orifices en adhérence l'un avec l'autre.

10. Procédé selon les revendications 7, 8 ou 9, comprenant de plus l'étape de détection de la longueur extrudée de chacun desdits premier et second corps continus, dans lequel ladite étape de l'enlèvement partiel du matériau est exécutée en réponse à la longueur extrudée détectée.

11. Procédé selon les revendications 7, 8, 9 ou 10, dans lequel ledit premier corps continu (28a) est coextrudé en même temps qu'un élément (25) de coeur ayant une résistivité à la chaleur qui est suffisante pour résister à la température de fusion du matériau en résine synthétique formant ledit premier corps continu, et dans lequel ladite étape d'enlèvement partiel du matériau est effectuée par rapport à cette région dudit premier corps continu qui comporte ledit élément de coeur.

12. Procédé selon la revendication 11, dans lequel ledit élément de coeur est disposé dans cette région dudit premier corps continu qui est opposée audit second corps continu.

13. Procédé selon les revendications 7,8, 9 ou 10, dans lequel ledit second corps continu est coextrudé en même temps qu'un élément de coeur ayant une résistivité à la chaleur qui est suffisante pour résister à la température de fusion du matériau en résine synthétique formant ledit second corps continu, et dans lequel ladite étape d'enlèvement partiel du matériau est effectué par rapport à cette région dudit second corps continu qui comporte ledit élément de coeur.

14. Procédé selon la revendication 13, dans lequel ledit élément de coeur est disposé dans cette région dudit second corps continu qui est opposée audit premier corps continu.

15. Procédé selon les revendications 11 ou 13, comprenant de plus les étapes consistant à:
- enlever continuellement le matériau partiellement depuis au moins l'un desdits premier et second corps continus, également le long d'une région longitudinale pour ledit segment latéral du joint ; et
- récupérer continuellement le matériau enlevé en même temps que ledit élément de coeur.
